# FASCICULE DE BREVET EUROPEEN

(11) **EP 2 507 739 B1**
(45) Date de publication et mention de la délivrance du brevet: **03.12.2014**
(21) Numéro de dépôt: 10781860.1
(22) Date de dépôt: 10.11.2010
(51) Int. Cl.: G06K 7/00, G06K 19/07

(54) **PROLONGATEUR D'ANTENNE RFID AUTO-PARAMETRABLE**
AUTO KONFIGURIERBARE RFID ANTENNENVERLÄNGERUNG
AUTO-CONFIGURABLE RFID ANTENNA EXTENSION

(30) Priorité: 01.12.2009 FR 0958541
(43) Date de publication de la demande: 10.10.2012
(73) Titulaire: Schneider Electric Industries SAS, 92500 Rueil-Malmaison (FR)
(72) Inventeur: CHAUVET, Francis, F-16440 Mouthiers (FR)
(74) Mandataire: Dufresne, Thierry
(86) Numéro de dépôt international: PCT/EP2010/067213
(87) Numéro de publication internationale: WO 2011/067084

(56) Documents cités:
- EP-A2- 1 521 206
- EP-A2- 1 865 445
- US-A1- 2007 008 139
- US-B1- 6 839 035

## Description

La présente invention se rapporte au domaine de l'identification par radiofréquence, appelée aussi RFID (Radio Frequency Identification), qui permet à une station de lecture/écriture RFID (appelée aussi station RFID ou lecteur RFID) de pouvoir échanger des données avec une ou plusieurs étiquettes RFID (appelée également transpondeur, tag ou smart label) lorsqu'elles sont placées à proximité de la station RFID dans une zone appelée zone de détection de la station. En particulier, l'invention se rapporte à un prolongateur d'antenne (appelé aussi field expander) qui est destiné à être couplé électromagnétiquement avec l'antenne d'une station RFID pour modifier la zone de détection de cette station, c'est-à-dire pour augmenter la surface et/ou la distance de détection de la station RFID.

Les systèmes d'échange de données par technologie RFID sont déjà largement utilisés, notamment dans l'industrie, pour reconnaître et/ou identifier dans un minimum de temps tout type d'objets porteurs d'une étiquette RFID placé à courte distance, en utilisant des ondes radio. La station RFID possède une antenne formée par un circuit oscillant dans lequel on peut créer ou capter un champ électromagnétique qui permet une communication sans fil par couplage électromagnétique (appelé aussi couplage inductif) avec tout circuit oscillant placé dans une zone de détection de la station RFID, par exemple avec l'antenne d'une étiquette RFID. Généralement, les données binaires sont échangées entre une station et une étiquette par une modulation en amplitude et/ou en phase de la fréquence porteuse du signal électromagnétique.

Une étiquette RFID est ainsi capable de recevoir un signal radio et de renvoyer en réponse un signal différent contenant une information pertinente. Elle possède une mémoire qui permet de stocker diverses informations d'identification, de reconnaissance et/ou de process. Certaines étiquettes permettent uniquement une lecture de données préalablement stockées lorsqu'une station est placée à proximité mais d'autres permettent en plus une écriture des données (écriture unique ou multiple) stockées dans l'étiquette.

Par ailleurs, dans le cas d'une étiquette dite passive, le signal électromagnétique (porteuse) créé par l'antenne de la station RFID sert également à alimenter électriquement l'étiquette lorsque celle-ci passe dans la zone de détection de la station. L'énergie captée par l'antenne de l'étiquette est en effet transformée en énergie électrique qui alimente les circuits internes (mémoire, unité de traitement,...) de cette étiquette. En utilisant la puissance produite par le champ électromagnétique de la station, l'étiquette présente donc l'avantage de ne pas nécessiter d'alimentation interne telle qu'une pile ou une batterie.

Comme il existe de nombreuses applications où la zone de détection standard d'une station de lecture/écriture RFID présente des dimensions trop limitées qui rendent difficile la lecture/écriture d'une étiquette, il est déjà connu d'utiliser un dispositif de prolongation d'antenne RFID. Un prolongateur d'antenne RFID comporte généralement un circuit oscillant LC, comprenant une bobine L et une capacité C. Ce circuit oscillant possède des dimensions supérieures à celles de l'antenne de la station de lecture/écriture et est positionné entre l'antenne de la station et les étiquettes à lire/écrire. Il permet alors d'étendre la zone de détection de la station. Le circuit oscillant LC du prolongateur est donc couplé électromagnétiquement avec l'antenne de la station RFID. Préférentiellement, le prolongateur est un produit distinct de la station RFID, de façon à ne l'utiliser que dans les cas d'utilisation où l'on souhaite augmenter la zone de détection d'une station de portée standard, par exemple. Les documents EP1385120, FR2896898, EP1309938 et US 2007/008139 décrivent déjà des dispositifs de prolongation permettant d'étendre la portée d'une antenne RFID.

Pour bien fonctionner, un prolongateur doit être accordé à la même fréquence de résonance que la station de lecture/écriture. Or, les conditions d'utilisation et l'environnement influent sur l'accord du circuit oscillant de la station RFID avec celui du prolongateur. Les variations de la fréquence du circuit oscillant d'une station RFID sont faibles, car la station est généralement blindée. Par contre en fonction des changements d'environnement, les variations de la fréquence du circuit oscillant d'un prolongateur sont beaucoup plus importantes suivant les applications. Il y a donc un risque d'augmentation des pertes qui entraîne, pour une même distance étiquette/prolongateur, une diminution de la puissance transmise à l'étiquette avec laquelle on veut communiquer et donc implicitement une diminution de la distance de lecture/écriture.

Disposer un blindage autour du prolongateur est une solution qui serait coûteuse et difficile à réaliser. Par ailleurs, effectuer un réglage de l'accord d'un prolongateur avec une station RFID est contraignant car, pour chaque application différente, il faudrait l'accorder dans son environnement final d'utilisation à la même fréquence que la station RFID. Ceci demanderait des appareils de mesure onéreux et la présence d'un spécialiste pour chaque installation d'un prolongateur.

C'est pourquoi, l'invention a pour but de proposer un dispositif de prolongation d'antenne qui soit capable de s'auto-paramétrer, c'est-à-dire de se paramétrer de façon autonome, c'est-à-dire sans devoir le raccorder à une source d'énergie extérieure et sans l'assistance d'une personne ou d'un appareil externe, et qui soit capable de s'accorder automatiquement sur la fréquence de résonance de la station de lecture/écriture avec laquelle il est couplé. Grâce à cette fonction d'apprentissage (appelée aussi auto-paramétrage ou auto-tuning), un tel prolongateur d'antenne peut être installé très simplement et rapidement avec toute station de lecture/écriture, lorsque l'on souhaite augmenter la zone de détection de cette station.

Pour cela, l'invention décrit un prolongateur d'antenne destiné à être couplé électromagnétiquement à une station de lecture/écriture RFID, le prolongateur comportant un premier circuit oscillant à fréquence variable et un deuxième circuit oscillant couplé avec le premier circuit oscillant. Le prolongateur comporte une unité de traitement qui est alimentée par l'énergie fournie par le deuxième circuit oscillant lorsque le prolongateur est placé à proximité de la station de lecture/écriture, et l'unité de traitement comporte des moyens de mesure d'une tension aux bornes du deuxième circuit oscillant et comporte des moyens de commande capables de faire varier la fréquence de résonance du premier circuit oscillant en fonction de la valeur de la tension mesurée, pour optimiser l'accord de fréquence entre le prolongateur et la station de lecture/écriture.

Selon une caractéristique, les moyens de commande font varier la fréquence de résonance du premier circuit oscillant de façon à obtenir une valeur maximale de la tension mesurée.

Selon une autre caractéristique, le premier circuit oscillant comporte une capacité variable et les moyens de commande font varier la valeur de la capacité variable.

L'invention décrit également un système d'échange de données comportant une station de lecture/écriture RFID, un prolongateur d'antenne et au moins une étiquette RFID, la station de lecture/écriture RFID pouvant communiquer avec l'étiquette RFID par couplage électromagnétique au moyen du prolongateur d'antenne.

L'invention décrit également un procédé d'optimisation d'accord de fréquence d'un prolongateur d'antenne couplé électromagnétiquement avec une station de lecture/écriture RFID, le prolongateur comprenant une unité de traitement, un premier circuit oscillant et un deuxième circuit oscillant. L'unité de traitement mesure une tension aux bornes du deuxième circuit oscillant et fait varier la fréquence de résonance du premier circuit oscillant en fonction de la valeur de la tension mesurée, de façon à obtenir une valeur maximale de la tension mesurée.

D'autres caractéristiques et avantages vont apparaître dans la description détaillée qui suit en se référant à un mode de réalisation donné à titre d'exemple et représenté par les dessins annexés sur lesquels :
- la figure 1 montre un système d'échange de données conforme à l'invention,
- la figure 2 représente un exemple de réalisation d'un schéma fonctionnel de prolongateur d'antenne,
- la figure 3 détaille un exemple de réalisation d'une capacité variable du prolongateur.

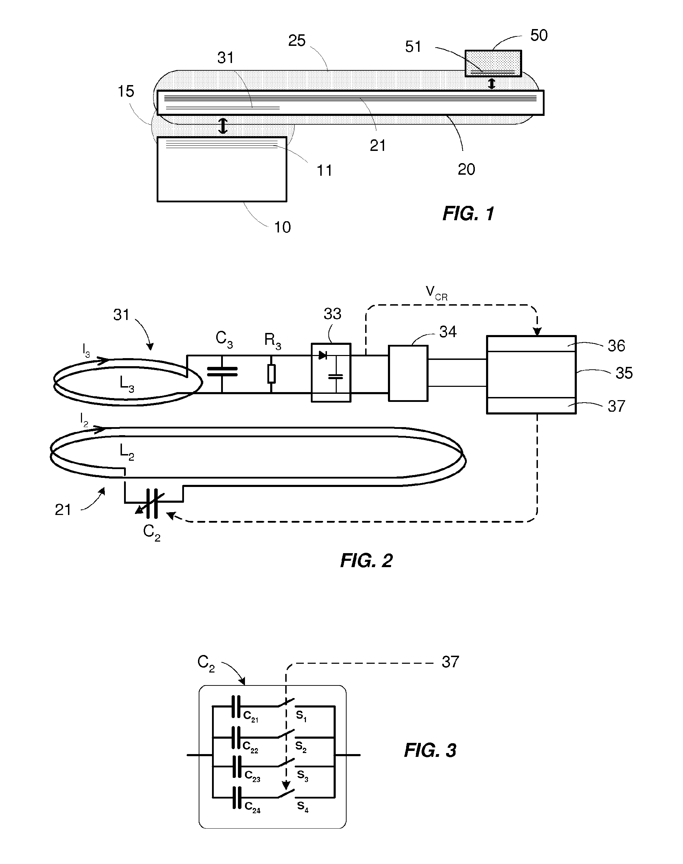

En référence aux figures 1 et 2, un système d'échange de données par technologie RFID comporte une station de lecture/écriture RFID 10 comprenant une antenne 11 formée par un circuit oscillant et au moins une étiquette RFID 50 comprenant une antenne 51 formée également par un circuit oscillant. La station de lecture/écriture RFID 10 est capable d'émettre un signal électromagnétique dans une zone de détection 15 qui correspond à la portée standard de la station 10. La fréquence nominale d'émission de la station de lecture/écriture RFID 10 est par exemple de 13,56 MHz, conformément notamment à la norme ISO14443A ou ISO14443B. En fonction des composants utilisés pour la station RFID 10 et de leur évolution dans le temps, cette fréquence nominale d'émission peut légèrement varier.

Le système d'échange de données comporte également un prolongateur d'antenne 20 qui a pour fonction d'augmenter la zone de détection de la station 10 et donc d'augmenter la portée de la station 10. Le prolongateur 20 comporte un premier circuit oscillant 21 et un deuxième circuit oscillant 31 distinct. Le premier circuit oscillant 21 et le deuxième circuit oscillant 31 sont couplés électromagnétiquement entre eux, mais n'ont pas de connexion électrique directe. Lorsque le prolongateur 20 est placé à proximité de la station 10, c'est-à-dire dans la zone de détection standard 15, il est alors couplé électromagnétiquement avec la station 10 et il permet à l'ensemble station 10 + prolongateur 20 de présenter une zone de détection élargie 25. Ainsi toute étiquette 50 se trouvant à l'intérieur de cette zone de détection élargie 25 sera capable de communiquer avec la station de lecture/écriture RFID 10 par couplage électromagnétique, par l'intermédiaire du prolongateur 20.

Le premier circuit oscillant 21 du prolongateur 20 a pour principale fonction d'étendre la zone de détection de la station 10 et comporte donc des dimensions étendues. Il est composé d'une bobine L2 et d'une capacité C2. Selon l'invention, au moins la bobine L2 ou la capacité C2 est variable de façon à pouvoir modifier la fréquence de résonance du premier circuit oscillant 21.

Le deuxième circuit oscillant 31 du prolongateur 20 a pour principale fonction d'alimenter électriquement les circuits électroniques du prolongateur 20 à partir du signal qu'il reçoit par couplage électromagnétique avec la station 10. Dans le mode de réalisation présenté, il est composé d'une bobine L3 et éventuellement d'une capacité C3 et possède une fréquence de résonance sensiblement constante.

Le prolongateur 20 comporte une unité de traitement 35. Cette unité de traitement 35 comprend des moyens de mesure 36 d'une grandeur électrique représentative de la tension aux bornes du deuxième circuit oscillant 31 ou du courant circulant dans le deuxième circuit oscillant 31. L'unité de traitement 35 comporte aussi des moyens de commande 37 capables de modifier la valeur de la capacité C2 et/ou de la bobine L2 dans le but de faire varier la fréquence de résonance du premier circuit oscillant 21.

L'unité de traitement 35 est alimentée électriquement par l'énergie fournie par le deuxième circuit oscillant 31 lorsque le prolongateur 20 est placé à proximité de la station RFID 10, de telle sorte que le deuxième circuit oscillant 31 est situé dans le champ de la zone de détection standard 15 de la station 10. Pour cela, le prolongateur 20 comporte un module alimentation 34 qui est par exemple une alimentation linéaire avec transistor ballast ou bien une alimentation à découpage. Ce module alimentation 34 reçoit en entrée une tension provenant du deuxième circuit oscillant 31 et délivre en sortie une tension continue stabilisée, suffisante pour alimenter les circuits du prolongateur 20, en particulier l'unité de traitement 35.

Avantageusement, le prolongateur d'antenne selon l'invention est un appareil autonome. Il n'a pas besoin d'être raccordé électriquement à une source d'alimentation externe et n'a pas non plus besoin d'utiliser une source d'alimentation interne, telle qu'une pile. C'est donc un appareil très simple et peu coûteux qui est uniquement alimenté par couplage électromagnétique avec une station de lecture/écriture RFID 10.

Selon un mode de réalisation préféré de l'invention, les moyens de mesure 36 mesurent une tension crête V_{CR} délivrée par le deuxième circuit oscillant 31 aux bornes d'une charge R3 en série avec la bobine L3. Pour cela, le prolongateur 20 comporte un module détecteur de crête 33 qui fournit en sortie la tension crête V_{CR}. De façon connue, le module détecteur de crête 33 est par exemple composé d'une diode et d'une capacité en parallèle, comme indiqué dans la figure 2. La tension crête V_{CR} est également utilisée en entrée du module alimentation 34. Les moyens de mesure 36 comportent un convertisseur analogique/digital permettant de délivrer à l'unité de traitement 35 une valeur numérique de la tension crête V_{CR}. La charge R3 peut être une simple résistance ou un générateur de courant, pour éviter une trop grande consommation.

On pourrait envisager également que les moyens de mesure 36 mesurent d'autres grandeurs électriques représentatives de la tension aux bornes du deuxième circuit oscillant 31, comme la tension moyenne ou la tension efficace. Néanmoins, ces tensions sont plus difficiles à mesurer et leurs mesures consomment plus d'énergie. De même, dans le cadre de la présente invention, il est évident que, pour un Homme du métier, il serait équivalent que les moyens de mesure 36 mesurent un courant I₃ circulant dans la bobine L₃ du deuxième circuit oscillant 31, plutôt que de mesurer une tension aux bornes du deuxième circuit oscillant 31.

Lorsque le prolongateur est couplé avec une station de lecture/écriture RFID 10, la valeur de la tension crête V_{CR} mesurée par les moyens de mesure 36 est directement dépendante de l'accord de fréquence entre d'une part la fréquence de résonance de la station 10 et d'autre part la fréquence de résonance de l'ensemble des deux circuits oscillants 21, 31 du prolongateur 20. Cela signifie qu'une variation de la fréquence de résonance du premier circuit oscillant 21 entraîne automatiquement une variation de la valeur de la tension crête V_{CR} délivrée par le deuxième circuit oscillant 31.

Quand les moyens de commande 37 modifient la valeur de la capacité C2, cela fait varier la fréquence de résonance du premier circuit oscillant 21. Les moyens de mesure 36 sont alors capables de détecter l'influence que cette variation provoque sur l'accord entre les fréquences de résonance de la station 10 et du prolongateur 20. En pratique, cet accord de fréquence sera optimal lorsque la tension crête V_{CR} mesurée sera maximale.

Dans l'exemple de réalisation décrit ci-dessus, les moyens de commande 37 font varier la fréquence de résonance du premier circuit oscillant 21 en agissant sur la valeur de la capacité C2 variable. Un autre mode de réalisation équivalent serait d'utiliser une inductance L2 variable dont la valeur serait modifiable par les moyens de commande 37.

L'unité de traitement 35 exécute donc un procédé d'optimisation d'accord de fréquence entre une station de lecture/écriture RFID et un prolongateur d'antenne couplé électromagnétiquement avec la station RFID. Ce procédé d'optimisation permet au prolongateur 20 de s'auto-paramétrer, c'est-à-dire d'optimiser sa propre fréquence de résonance de façon à s'accorder au mieux avec son environnement d'utilisation et avec la station de lecture/écriture RFID 10 à laquelle il est couplé.

Le procédé d'optimisation consiste en un apprentissage du prolongateur 20 : l'unité de traitement 35 ordonne aux moyens de commande 37 de modifier la capacité C2, puis analyse le sens de variation de la tension crête V_{CR} mesurée par les moyens de mesure 36, provoquée par cette modification. Si une variation de la capacité C2 entraîne une augmentation de la tension crête V_{CR}, alors cela signifie que l'accord de fréquence s'améliore. Inversement, si une variation de la capacité C2 entraîne une diminution de la tension crête V_{CR}, alors cela signifie que l'accord de fréquence se détériore.

L'apprentissage consiste donc simplement à faire des modifications successives de la valeur de la capacité C2 et à détecter le sens de variation de la tension crête V_{CR} que cela génère. L'apprentissage se termine lorsqu'on atteint une valeur maximum de la tension crête V_{CR}, ce qui correspond à un accord de fréquence optimal. Avantageusement, aucune intervention d'un utilisateur et aucun moyen extérieur ne sont nécessaires pour effectuer cet apprentissage.

L'apprentissage se ferait de façon identique en utilisant une autre grandeur électrique, telle que tension moyenne, tension efficace ou courant dans le deuxième circuit oscillant 31, à la place de la tension crête V_{CR}.

Plusieurs solutions existent pour faire varier la capacité C2 du premier circuit oscillant 21. Dans une première solution, la capacité C2 comporte une ou plusieurs diodes à capacité variable (appelées aussi varicap ou varactor), qui ont une valeur de capacité qui varie en fonction du niveau de tension inverse appliquée sur la cathode. Les moyens de commande 37 comprennent alors par exemple une sortie analogique permettant de moduler la valeur de cette tension inverse appliquée et donc de faire varier la valeur de la capacité C2.

Dans une deuxième solution représentée en figure 3, la capacité C2 comporte plusieurs capacités C21, C22, C23, C24 reliées en parallèle et commutables chacune par des commutateurs S1, S2, S3, S4. Les commutateurs S1, S2, S3, S4 sont bistables et sont commandés par les moyens de commandes 37, grâce à un signal d'ouverture et un signal de fermeture par commutateur. Ainsi, la fermeture ou l'ouverture de chaque commutateur connecte ou déconnecte la capacité C21, C22, C23, C24 correspondante, ce qui fait varier la valeur globale de la capacité C2. Préférentiellement, on choisit des poids différents pour chacune des valeurs des capacités C21, C22, C23, C24, comme par exemple C21 = X, C22 = 2*X, C23 = 4*X, C24= 8*X, de façon à couvrir une plus large plage de valeurs distinctes pour la capacité C2 en combinant les fermetures/ouvertures des commutateurs.

De plus, le premier circuit oscillant 21 peut également comporter une capacité supplémentaire fixe reliée en parallèle avec la capacité variable C2, dans le but de fournir une valeur fixe de base à la fréquence de résonance du premier circuit oscillant 21. Ainsi, les variations de la capacité variable C2 ne servent alors qu'à ajuster la fréquence de résonance autour de cette valeur fixe de base, ce qui permet un ajustement plus précis.

L'apprentissage peut être effectué lors de chaque mise sous tension de l'unité de traitement 35, c'est-à-dire au moment où le prolongateur 20 est placé à proximité d'une station 10. L'unité de traitement 35 peut également décider d'effectuer périodiquement un apprentissage de façon à réaliser un accord dynamique, c'est-à-dire s'assurer que le système d'échange de données reste en permanence bien accordé, malgré d'éventuelles variations de l'environnement, par exemple. L'unité de traitement 35 pourrait également décider d'effectuer un apprentissage dans d'autres circonstances, par exemple lorsqu'elle détecte une brusque variation de la tension crête V_{CR}.

Par ailleurs, au moment d'une remise sous tension du prolongateur 20, il est préférable de redémarrer l'apprentissage avec la dernière valeur de la capacité variable C2 utilisée avant la coupure de l'alimentation, pour éviter de refaire la totalité de l'apprentissage. Cela signifie par exemple que l'unité de traitement 35 conserve dans une mémoire sauvegardée le réglage correspondant à la dernière valeur de la capacité C2 ou que les commutateurs utilisés pour réaliser la capacité variable C2 gardent leur état lorsque l'alimentation est coupée.

L'unité de traitement 35 peut être réalisée à partir d'un microcontrôleur ou un microprocesseur, ayant de préférence une faible consommation électrique. Les moyens de mesure 36 et les moyens de commande 37 peuvent indifféremment être directement intégrés dans le microcontrôleur ou être implantés dans des composants distincts connectés au microcontrôleur.

Pour optimiser l'alimentation de l'unité de traitement 35, on peut aussi envisager de placer, en série avec la bobine L2 du premier circuit oscillant 21, un commutateur d'alimentation de type normalement ouvert (non passant), commandé par les moyens de commande 37. A la mise sous tension du prolongateur 20, tant que l'unité de traitement 35 n'est pas suffisamment alimentée, ce commutateur est à l'état ouvert et le premier circuit oscillant 21 n'est pas opérationnel. Ceci permet alors au deuxième circuit oscillant 31 de récupérer toute l'énergie générée par le couplage avec la station RFID 10, de façon à stocker plus rapidement une énergie suffisante pour l'unité de traitement 35. Dès que l'unité de traitement 35 est suffisamment alimentée, les moyens de commande 37 ferment le commutateur d'alimentation pour obtenir le fonctionnement normal du prolongateur 20.

Préférentiellement, les composants L3 et C3 sont choisis pour que la fréquence de résonance du deuxième circuit oscillant 31 soit sensiblement différente de la fréquence de résonance nominale de la porteuse du signal électromagnétique émis par la station 10. Ainsi, le deuxième circuit oscillant 31 seul est volontairement mal accordé pour ne pas trop perturber les performances globales du prolongateur d'antenne 20, mais pour juste prélever l'énergie nécessaire au fonctionnement de l'unité de traitement 35, en particulier durant la phase d'auto-paramétrage. Par exemple, si la fréquence de résonance nominale de la station 10 est égale à 13,56 MHz, alors la fréquence de résonance du deuxième circuit oscillant 31 peut être choisie égale à 15 MHz. En effet, plus le deuxième circuit oscillant 31 est bien accordé avec la fréquence de résonance de la station 10, plus on aura de l'énergie disponible pour alimenter l'unité de traitement 35, mais moins on sera précis pour accorder correctement le premier circuit oscillant 21, ce qui est le plus important pour garantir les performances du prolongateur 20.

## Revendications

1. Prolongateur d'antenne (20) destiné à être couplé électromagnétiquement avec une station de lecture/écriture RFID (10), le prolongateur (20) comportant un premier circuit oscillant (21) à fréquence variable et un deuxième circuit oscillant (31) couplé avec le premier circuit oscillant (21),
- le prolongateur (20) comporte une unité de traitement (35) qui est alimentée par l'énergie fournie par le deuxième circuit oscillant (31) lorsque le prolongateur (20) est placé à proximité de la station de lecture/écriture (10),
le prolongateur (20) est **caractérisé en ce que** :
- l'unité de traitement (35) comporte des moyens de mesure (36) qui mesurent une tension aux bornes du deuxième circuit oscillant (31) et comporte des moyens de commande (37) capables de faire varier la fréquence de résonance du premier circuit oscillant (21) en fonction de la valeur de la tension mesurée, pour optimiser l'accord de fréquence entre le prolongateur (20) et la station de lecture/écriture (10).

2. Prolongateur d'antenne selon la revendication 1, **caractérisé en ce que** les moyens de commande (37) font varier la fréquence de résonance du premier circuit oscillant (21) de façon à obtenir une valeur maximale de la tension mesurée.

3. Prolongateur d'antenne selon la revendication 2, **caractérisé en ce que** les moyens de mesure (36) mesurent une tension crête du deuxième circuit oscillant (31).

4. Prolongateur d'antenne selon la revendication 2, **caractérisé en ce que** les moyens de mesure (36) mesurent une tension efficace ou une tension moyenne du deuxième circuit oscillant (31).

5. Prolongateur d'antenne selon la revendication 1, **caractérisé en ce que** le premier circuit oscillant (21) comporte une capacité variable (C2) et les moyens de commande (37) font varier la valeur de la capacité variable (C2).

6. Prolongateur d'antenne selon la revendication 5, **caractérisé en ce que** la capacité variable (C2) comprend une ou plusieurs diodes à capacité variable.

7. Prolongateur d'antenne selon la revendication 5, **caractérisé en ce que** la capacité variable (C2) comprend une pluralité de capacités (C21, C22, C23, C24) reliées en parallèle et commutables à l'aide de commutateurs bistables (S₁, S₂, S₃, S4) commandés par les moyens de commande (37).

8. Prolongateur d'antenne selon la revendication 5, **caractérisé en ce que** le premier circuit oscillant (21) comporte également une capacité supplémentaire fixe reliée en parallèle avec la capacité variable (C2).

9. Prolongateur d'antenne selon la revendication 1, **caractérisé en ce que** le premier circuit oscillant comporte (21) une bobine variable (L2) et les moyens de commande (37) font varier la valeur de la bobine variable (L2).

10. Prolongateur d'antenne selon la revendication 1, **caractérisé en ce que** la fréquence de résonance du deuxième circuit oscillant est choisie pour être différente de la fréquence de résonance de l'antenne de la station de lecture/écriture.

11. Système d'échange de données comportant une station de lecture/écriture RFID (10) et au moins une étiquette RFID (50), **caractérisé en ce que** le système d'échange de données comporte un prolongateur d'antenne (20) selon l'une des revendications précédentes, permettant à la station de lecture/écriture RFID de pouvoir communiquer avec l'étiquette RFID par couplage électromagnétique.

12. Procédé d'optimisation d'accord de fréquence d'un prolongateur d'antenne (20) couplé électromagnétiquement avec une station de lecture/écriture RFID (10), le prolongateur comprenant une unité de traitement (35), un premier circuit oscillant (21) et un deuxième circuit oscillant (31), **caractérisé en ce que** l'unité de traitement (35) mesure une tension aux bornes du deuxième circuit oscillant (31) et fait varier la fréquence de résonance du premier circuit oscillant (21) en fonction de la valeur de la tension mesurée, de façon à obtenir une valeur maximale de la tension mesurée.

13. Procédé d'optimisation selon la revendication 12, **caractérisé en ce que** le procédé est exécuté à chaque mise sous tension de l'unité de traitement (35).

14. Procédé d'optimisation selon la revendication 12, **caractérisé en ce que** le procédé est exécuté périodiquement par l'unité de traitement (35).

## Patentansprüche

1. Antennenverlängerung (20), die dazu bestimmt ist, elektromagnetisch an eine RFID-Lese/Schreibstation (10) gekoppelt zu werden, wobei die Verlängerung (20) einen ersten Schwingkreis (21) mit variabler Frequenz und einen zweiten Schwingkreis (31) aufweist, der mit dem ersten Schwingkreis (21) gekoppelt ist,
- die Verlängerung (20) eine Verarbeitungseinheit (35) aufweist, die durch die Energie versorgt wird, die durch den zweiten Schwingkreis (31) geliefert wird, wenn die Verlängerung (20) in der Nähe der Lese/Schreibstation (10) untergebracht ist, wobei die Verlängerung (20) **dadurch gekennzeichnet ist, dass**:
- die Verarbeitungseinheit (35) Messmittel (36) aufweist, die eine Spannung an den Klemmen des zweiten Schwingkreises (31) messen, und Steuerungsmittel (37) aufweist, die in der Lage sind, die Resonanzfrequenz des ersten Schwingkreises (21) in Abhängigkeit vom Wert der gemessenen Spannung zu verändern, um die Frequenzabstimmung zwischen der Verlängerung (20) und der Lese/Schreibstation (10) zu verbessern.

2. Antennenverlängerung nach Anspruch 1, **dadurch gekennzeichnet, dass** die Steuerungsmittel (37) die Resonanzfrequenz des ersten Schwingkreises (21) derart ändern, dass ein Höchstwert der gemessenen Spannung erhalten wird.

3. Antennenverlängerung nach Anspruch 2, **dadurch gekennzeichnet, dass** die Messmittel (36) eine Spitzenspannung des zweiten Schwingkreises (31) messen.

4. Antennenverlängerung nach Anspruch 2, **dadurch gekennzeichnet, dass** die Messmittel (36) eine Effektivspannung oder eine mittlere Spannung des zweiten Schwingkreises (31) messen.

5. Antennenverlängerung nach Anspruch 1, **dadurch gekennzeichnet, dass** der erste Schwingkreis (21) eine variable Kapazität (C2) aufweist und die Steuerungsmittel (37) den Wert der variablen Kapazität (C2) verändern.

6. Antennenverlängerung nach Anspruch 5, **dadurch gekennzeichnet, dass** die variable Kapazität (C2) eine oder mehrere Dioden mit variabler Kapazität aufweist.

7. Antennenverlängerung nach Anspruch 5, **dadurch gekennzeichnet, dass** die variable Kapazität (C2) mehrere Kapazitäten (C21, C22, C23, C24) aufweist, die parallel verbunden sind und mittels bistabiler Schalter (S1, S2, S3, S4) schaltbar sind, die durch die Steuerungsmittel (37) gesteuert werden.

8. Antennenverlängerung nach Anspruch 5, **dadurch gekennzeichnet, dass** der erste Schwingkreis (21) auch eine zusätzliche feste Kapazität aufweist, die parallel mit der variablen Kapazität (C2) verbunden ist.

9. Antennenverlängerung nach Anspruch 1, **dadurch gekennzeichnet, dass** der erste Schwingkreis (21) eine variable Spule (L2) aufweist und die Steuerungsmittel (37) den Wert der variablen Spule (L2) verändern.

10. Antennenverlängerung nach Anspruch 1, **dadurch gekennzeichnet, dass** die Resonanzfrequenz des zweiten Schwingkreises ausgewählt ist, um unterschiedlich von der Resonanzfrequenz der Antenne der Lese/Schreibstation zu sein.

11. Datenaustauschsystem, das eine RFID-Lese/Schreibstation (10) und mindestens ein RFID-Etikett (50) aufweist, **dadurch gekennzeichnet, dass** das Datenaustauschsystem eine Antennenverlängerung (20) nach einem der vorhergehenden Ansprüche aufweist, die es der RFID-Lese/Schreibstation ermöglicht, mit dem RFID-Etikett durch elektromagnetische Kopplung zu kommunizieren.

12. Verfahren zur Optimierung der Frequenzabstimmung einer Antennenverlängerung (20), die elektromagnetisch mit einer RFID-Lese/Schreibstation (10) gekoppelt ist, wobei die Verlängerung eine Verarbeitungseinheit (35), einen ersten Schwingkreis (21) und einen zweiten Schwingkreis (31) aufweist, **dadurch gekennzeichnet, dass** die Verarbeitungseinheit (35) eine Spannung an den Klemmen des zweiten Schwingkreises (31) misst und die Resonanzfrequenz des ersten Schwingkreises (21) in Abhängigkeit von dem Wert der gemessenen Spannung ändert, derart, dass ein Höchstwert der gemessenen Spannung erhalten wird.

13. Optimierungsverfahren nach Anspruch 12, **dadurch gekennzeichnet, dass** das Verfahren bei jedem Unterspannungssetzen der Verarbeitungseinheit (35) ausgeführt wird.

14. Optimierungsverfahren nach Anspruch 12, **dadurch gekennzeichnet, dass** das Verfahren periodisch durch die Verarbeitungseinheit (35) ausgeführt wird.

## Claims

1. An antenna extender (20) intended to be coupled electromagnetically with an RFID read/write station (10), the extender (20) comprising a first variable-frequency oscillating circuit (21) and a second oscillating circuit (31) coupled with the first oscillating circuit (21),
- the extender (20) comprising a processing unit (35) which is powered by the energy provided by the second oscillating circuit (31) when the extender (20) is placed near the read/write station (10),
the extender (20) being **characterized in that**
- the processing unit (35) comprises measurement means (36) which measure a voltage across the terminals of the second oscillating circuit (31) and comprises control means (37) capable of varying the resonance frequency of the first oscillating circuit (21) as a function of the value of the measured voltage, so as to optimize the frequency tuning between the extender (20) and the read/write station (10).

2. The antenna extender as claimed in claim 1, **characterized in that** the control means (37) vary the resonance frequency of the first oscillating circuit (21) so as to obtain a maximum value of the measured voltage.

3. The antenna extender as claimed in claim 2, **characterized in that** the measurement means (36) measure a peak voltage of the second oscillating circuit (31).

4. The antenna extender as claimed in claim 2, **characterized in that** the measurement means (36) measure an effective voltage or a mean voltage of the second oscillating circuit (31).

5. The antenna extender as claimed in claim 1, **characterized in that** the first oscillating circuit (21) comprises a variable capacitor (C2) and the control means (37) vary the value of the variable capacitor (C2).

6. The antenna extender as claimed in claim 5, **characterized in that** the variable capacitor (C2) comprises one or more variable-capacitance diodes.

7. The antenna extender as claimed in claim 5, **characterized in that** the variable capacitor (C2) comprises a plurality of capacitors (C21, C22, C23, C24) linked in parallel and switchable with the aid of bistable switches (S1, S2, S3, S4) controlled by the control means (37).

8. The antenna extender as claimed in claim 5, **characterized in that** the first oscillating circuit (21) also comprises a fixed additional capacitor linked in parallel with the variable capacitor (C2).

9. The antenna extender as claimed in claim 1, **characterized in that** the first oscillating circuit (21) comprises a variable coil (L2) and the control means (37) vary the value of the variable coil (L2).

10. The antenna extender as claimed in claim 1, **characterized in that** the resonance frequency of the second oscillating circuit is chosen to be different from the resonance frequency of the antenna of the read/write station.

11. A system for exchanging data comprising an RFID read/write station (10) and at least one RFID tag (50), **characterized in that** the system for exchanging data comprises an antenna extender (20) as claimed in one of the preceding claims, allowing the RFID read/write station to be able to communicate with the RFID tag by electromagnetic coupling.

12. A method for optimizing frequency tuning of an antenna extender (20) coupled electromagnetically with an RFID read/write station (10), the extender comprising a processing unit (35), a first oscillating circuit (21) and a second oscillating circuit (31), **characterized in that** the processing unit (35) measures a voltage across the terminals of the second oscillating circuit (31) and varies the resonance frequency of the first oscillating circuit (21) as a function of the value of the measured voltage, so as to obtain a maximum value of the measured voltage.

13. The method of optimization as claimed in claim 12, **characterized in that** the method is executed each time the processing unit (35) is powered up.

14. The method of optimization as claimed in claim 12, **characterized in that** the method is executed periodically by the processing unit (35).
